# FASCICULE DE BREVET EUROPEEN

(11) **EP 1 902 276 B1**
(45) Date de publication et mention de la délivrance du brevet: **08.01.2014**
(21) Numéro de dépôt: 06778852.1
(22) Date de dépôt: 11.07.2006
(51) Int. Cl.: G01C 21/00, G01C 23/00, G05D 1/06

(54) **DISPOSITIF D'AIDE A UNE APPROCHE AVEC GUIDAGE VERTICAL POUR AERONEF**
EINRICHTUNG ZUM UNTERSTÜTZEN EINES VERTIKALFÜHRUNGSANFLUGS FÜR EIN FLUGZEUG
DEVICE FOR ASSISTING A VERTICAL GUIDANCE APPROACH FOR AIRCRAFT

(30) Priorité: 13.07.2005 FR 0507504
(43) Date de publication de la demande: 26.03.2008
(73) Titulaire: AIRBUS OPERATIONS (SAS), 31060 Toulouse (FR)
(72) Inventeur: ROUQUETTE, Patrice, F-31450 Pompertuzat (FR); OTT, Adrien, F-94260 Fresnes (FR); MAES, Laure, F-31000 Toulouse (FR); AUCHER, Caroline, F-31240 Saint Jean (FR); BATS, Mélanie, F-31300 Toulouse (FR); ORTET, Grégory, F-31100 Toulouse (FR)
(74) Mandataire: Hauer, Bernard
(86) Numéro de dépôt international: PCT/FR2006/001682
(87) Numéro de publication internationale: WO 2007/006966

(56) Documents cités:
- US-A- 3 309 707
- US-A- 3 345 017
- US-A- 5 677 685
- US-A- 5 945 943
- US-B1- 6 239 745

## Description

La présente invention concerne un dispositif d'aide à l'approche qui est monté sur un aéronef, en particulier un avion de transport, et qui est destiné à aider ledit aéronef au moins lors d'une approche avec guidage vertical.

On sait que les approches publiées actuelles, en vue de l'atterrissage d'un avion sur une piste d'atterrissage, se distinguent en deux catégories :
- les approches dites de "non précision" (en anglais "non precision approach"), pour lesquelles aucune exigence de performance verticale n'est imposée ; et
- les approches dites de "précision", telles que par exemple une approche de type ILS ("Instrument Landing System" en anglais, c'est-à-dire système d'atterrissage aux instruments), pour lesquelles des exigences de performance latérale et verticale sont imposées.

Les approches de précision présentent des hauteurs de décision à respecter plus faibles que les approches de non précision.

Les performances de l'aéronef à prendre en compte lors d'une approche dépendent, notamment, de la précision de la position courante de l'aéronef, qui est déterminée de façon périodique au cours du vol. Cette position courante est déterminée en général à partir de données de position qui sont engendrées par au moins un récepteur embarqué qui coopère avec un système usuel de positionnement global par satellites, par exemple de type GPS ("Global Positioning System" en anglais) ou de type GALILEO.

On sait par ailleurs qu'il existe des moyens de renforcement, par exemple de type GNSS ("Global Navigation Satellite System" en anglais), qui ont pour but d'améliorer les performances du récepteur utilisé, qui coopère avec un système de positionnement par satellites. L'utilisation de tels moyens de renforcement a entraîné l'émergence de nouvelles approches basées uniquement sur des critères de performances. Ces nouvelles approches se situent entre les approches de précision et les approches de non précision précitées. Ces nouvelles approches sont dites "approches avec guidage vertical" ou approches APV ("APproach with Vertical guidance" en anglais). Ces approches APV présentent deux niveaux de performance prédéterminés différents : APV1 et APV2. Les hauteurs de décision associées à ces deux niveaux de performance sont comprises entre les hauteurs de décision des approches de précision et les hauteurs de décision des approches de non précision.

On sait que les moyens de renforcement GNSS consistent en l'amélioration des performances du système de positionnement par satellites utilisé (précision, intégrité, continuité de service et disponibilité), et comportent des systèmes agissant par l'intermédiaire de stations sol de type GBAS ("Ground Based Augmentation System" en anglais) ou par l'intermédiaire de satellites géostationnaires de type SBAS ("geostationary Satellite Based Augmentation System" en anglais), ou des systèmes réalisant une amélioration autonome, c'est-à-dire qui est mise en oeuvre exclusivement à l'aide de moyens présents à bord de l'aéronef de type ABAS ("Airborne Based Augmentation System" en anglais).

Des systèmes de renforcement de type GBAS et SBAS nécessitent donc l'utilisation d'éléments extérieurs, alors qu'un système de renforcement de type ABAS est complètement autonome. Ce dernier est donc à privilégier, d'autant plus qu'un système de type SBAS par exemple n'est pas utilisable sur tout le globe terrestre, puisque le réseau de stations sol associé présente uniquement une couverture partielle du globe terrestre.
Par ailleurs, on connaît par le document US-5 945 943, un procédé particulier d'aide à l'approche qui utilise deux récepteurs DGPS, dont chacun fournit une information de position. Ces deux informations de position sont utilisées par un pilote automatique pour réaliser le guidage de l'aéronef lors de l'approche. Le document US-A-5 677 689 décrit une assistance au pilotage avec mauvaise visibilité en finale.

La présente invention concerne un dispositif d'aide à l'approche qui est monté sur un aéronef, en particulier un avion, par exemple un avion de transport, et qui est destiné à aider ledit aéronef, de façon autonome et particulièrement performante, au moins lors d'une approche avec guidage vertical de type APV précité suivant un axe d'approche.

A cet effet, selon l'invention, ledit dispositif d'aide à l'approche est remarquable en ce qu'il comporte :
- un système de gestion de vol qui détermine ledit axe d'approche ;
- un système de référence inertiel, qui élabore des données de position inertielles, qui reçoit des données de position GNSS de l'aéronef, et qui, à l'aide desdites données de position reçues et desdites données de position inertielles élaborées, détermine une position hybride de l'aéronef. Dans le cadre de la présente invention, on appelle cette position "position hybride", car elle est obtenue à partir de données de types différents (données de position, données de position inertielles), comme précisé ci-dessous ;
- un récepteur multimode d'aide à l'atterrissage, par exemple de type MMR ("Multi Mode Receiver" en anglais), qui est relié audit système de gestion de vol et audit système de référence inertiel, qui reçoit des informations relatives audit axe d'approche et à ladite position hybride, et qui en déduit des écarts angulaires latéraux et verticaux, au moins dès la capture dudit axe d'approche ; et
- un système de guidage qui est relié audit récepteur multimode d'aide à l'atterrissage et qui reçoit lesdits écarts angulaires latéraux et verticaux et les utilise pour le guidage de l'aéronef, au moins dès la capture dudit axe d'approche.

Ledit dispositif d'aide à l'approche conforme à l'invention est donc autonome (de type ABAS précité), puisque les moyens utilisés pour permettre une approche avec guidage vertical se trouvent tous à bord de l'aéronef.

De plus, grâce à l'invention, ledit système de gestion de vol, par exemple de type FMS ("Flight Management System" en anglais), est situé hors de la boucle de guidage lors du guidage de l'aéronef le long dudit axe d'approche en vue de l'atterrissage. Ceci présente plusieurs avantages et permet en particulier, comme précisé ci-dessous :
- d'obtenir une position de l'aéronef plus précise et intègre que celle obtenue de façon usuelle par ledit système de gestion de vol de type FMS, puisque l'on utilise uniquement des systèmes de niveau de développement élevé (système de référence inertiel, récepteur multimode d'aide à l'atterrissage, système de guidage) dans la boucle de position/guidage, ce qui n'est pas le cas pour le système de gestion de vol de type FMS ;
- de réduire les temps de latence dus au transfert des informations de positionnement dans la boucle de navigation/guidage ; et
- d'améliorer la précision et l'intégrité verticales et horizontales.

En particulier, pour augmenter la précision de l'aide apportée par le dispositif conforme à l'invention, ledit système de référence inertiel utilise un algorithme particulièrement performant pour calculer ladite position hybride de l'aéronef. Plus précisément, il utilise un algorithme d'hybridation usuel dit "precision-AIME" qui présente de nombreux avantages (précision, continuité, ...). On notera que l'intégrité des données d'axe d'approche est assurée par une surveillance redondante cyclique, de type CRC ("Cyclic Redundancy Check" en anglais), dans le récepteur multimode d'aide à l'atterrissage.

Ledit système de guidage comporte :
- des moyens, par exemple un pilote automatique, pour guider automatiquement l'aéronef, en tenant compte desdits écarts angulaires latéraux et verticaux déterminés par le récepteur multimode d'aide à l'atterrissage ; et/ou
- au moins un moyen de visualisation pour afficher, sur au moins un écran de visualisation, lesdits écarts angulaires latéraux et verticaux issus dudit récepteur multimode d'aide à l'atterrissage et des indications de guidage relatives auxdits écarts angulaires.

Ainsi, le dispositif d'aide à l'approche conforme à l'invention permet d'apporter une aide aussi bien lors d'un guidage automatique, que lors d'un guidage manuel.

Ledit dispositif comporte, de plus, un récepteur :
- qui coopère avec un système de positionnement par satellites, par exemple de type GPS ou autre ;
- qui est intégré dans ledit récepteur multimode d'aide à l'atterrissage ; et
- qui élabore lesdites données de position de l'aéronef qui sont ensuite transmises au moins audit système de référence inertiel.

Selon l'invention, ledit récepteur multimode d'aide à l'atterrissage comporte un moyen de surveillance intégré, qui surveille des paramètres de performance relatifs à la position hybride fournie par ledit système de référence inertiel, et qui transmet les résultats de cette surveillance (en général via un moyen de guidage qui les consolide) à un moyen de visualisation qui est susceptible de présenter ces résultats à un pilote de l'aéronef. Par conséquent, en fonction des performances effectives (notamment verticales) ainsi fournies, le pilote est averti de la capacité de l'aéronef à réaliser (ou non) une approche avec guidage vertical de type APV.

Dans ce cas, de préférence, ledit moyen de surveillance peut émettre des résultats qui sont relatifs respectivement aux situations suivantes :
- une première performance (ou niveau de performance) APV2 prédéterminée, relative à ladite approche avec guidage vertical, est tenue par l'aéronef ;
- ladite première performance APV2 n'est pas tenue par l'aéronef, mais une seconde performance (ou niveau de performance) APV1 moins stricte, également relative à ladite approche avec guidage vertical, est tenue par l'aéronef ;
- ladite seconde performance APV1 n'est pas tenue par l'aéronef, mais l'approche peut quand même être poursuivie ; et
- les performances sont insuffisantes pour poursuivre l'approche.

Par ailleurs, dans un mode de réalisation particulier, ledit système de gestion de vol détermine une position auxiliaire correspondant à la position de l'aéronef et, avant la capture dudit axe d'approche, ledit dispositif d'aide à l'approche conforme à l'invention utilise, de façon usuelle, cette position auxiliaire pour guider l'aéronef. Ainsi, avant la capture de l'axe d'approche, le guidage de l'aéronef est réalisé de façon usuelle, c'est-à-dire avec l'aide de la position calculée par le système de gestion de vol. Quant à la position hybride déterminée par le système de référence inertiel, elle est prise en compte dès le début de la capture de l'axe d'approche. Les performances notamment verticales concernant cette position, doivent permettre de respecter les niveaux de performance APV1 ou APV2 précités, permettant de mettre en oeuvre une approche avec guidage vertical de type APV.

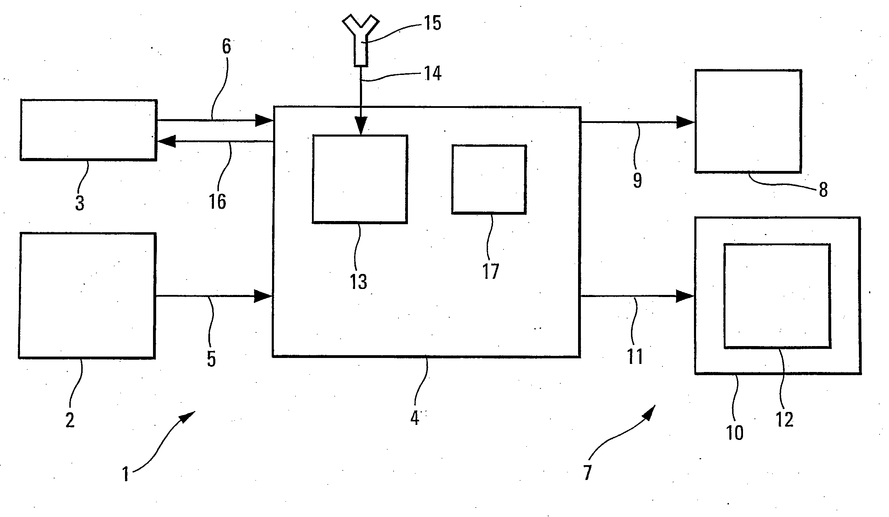

L'unique figure du dessin annexé fera bien comprendre comment l'invention peut être réalisée. Cette figure unique est le schéma synoptique d'un dispositif d'aide à l'approche conforme à l'invention.

Le dispositif 1 conforme à l'invention et représenté schématiquement sur la figure, est destiné à aider un aéronef non représenté, en particulier un avion, lors d'une approche d'un aéroport en vue d'un atterrissage sur une piste d'atterrissage. Plus précisément, ledit dispositif 1 est destiné à aider l'aéronef au moins lors d'une approche avec guidage vertical du type connu APV ("APproach with Vertical guidance" en anglais). Une telle approche APV (qui concerne une approche suivant un axe d'approche) est intermédiaire entre une approche de précision et une approche de non précision. De plus, une telle approche APV présente de façon connue deux niveaux de performance prédéterminés différents : APV1 et APV2. Les hauteurs de décision associées à ces deux niveaux de performance APV1 et APV2 sont comprises entre les hauteurs de décision des approches de précision et les hauteurs de décision des approches de non précision. A titre d'illustration, en ce qui concerne la précision horizontale de navigation (95%), les exigences sont de :
- 220 mètres pour une approche de non précision ;
- 16 mètres pour le niveau de performance APV1 ;
- 16 mètres pour le niveau de performance APV2 ; et
- 16 mètres pour une approche de précision.

De plus, en ce qui concerne la précision verticale de navigation (95%), les exigences sont :
- non applicables pour une approche de non précision (absence d'exigence de précision verticale de navigation) ;
- de 20 mètres pour le niveau de performance APV1 ;
- de 8 mètres pour le niveau de performance APV2 ; et
- de 4 à 6 mètres pour une approche de précision.

Selon l'invention, ledit dispositif 1 comporte :
- un système de gestion de vol 2, de préférence de type FMS ("Flight Management System" en anglais), qui détermine de façon usuelle l'axe d'approche selon lequel est réalisée l'approche. De façon usuelle, lors d'une phase d'approche, l'aéronef est tout d'abord guidé de manière à capturer cet axe d'approche, c'est-à-dire à le rejoindre, puis, dès qu'il a capturé cet axe d'approche, à le suivre jusqu'à l'atterrissage ;
- un système de référence inertiel 3, par exemple de type ADIRS ("Air Data Inertial Reference System" en anglais), qui élabore de façon usuelle des données de position inertielles, qui reçoit de plus des données de position de l'aéronef, comme précisé ci-dessous, et qui, à l'aide des données de position reçues et des données de position inertielles élaborées, détermine une position de l'aéronef dite position hybride. Dans le cadre de la présente invention, on parle de "position hybride", car la position de l'aéronef est déterminée (de façon usuelle) à partir de données de types différents (données de position, données de position inertielles) ;
- un récepteur multimode d'aide à l'atterrissage 4, de préférence de type MMR ("Multi Mode Receiver" en anglais), qui est relié audit système de gestion de vol 2 par l'intermédiaire d'une liaison 5 et audit système de référence inertiel 3 par l'intermédiaire d'une liaison 6, qui reçoit des informations relatives audit axe d'approche et à ladite position hybride respectivement desdits systèmes 2 et 3, et qui en déduit de façon usuelle d'éventuels écarts angulaires latéraux et verticaux ; et
- un système de guidage 7, précisé ci-dessous, qui reçoit lesdits écarts angulaires latéraux et verticaux déterminés par ledit récepteur multimode d'aide à l'atterrissage 4 et qui utilise ces écarts pour le guidage de l'aéronef, ceci dès la capture dudit axe d'approche.

Ledit dispositif d'aide à l'approche 1 conforme à l'invention est donc autonome (de type ABAS précité), puisque les moyens utilisés pour permettre une approche avec guidage vertical (approche APV) se trouvent tous à bord de l'aéronef.

De plus, grâce à l'invention, le système de gestion de vol 2, par exemple de type FMS ("Flight Management System" en anglais), est situé hors de la boucle de guidage lors du guidage de l'aéronef le long dudit axe d'approche en vue de l'atterrissage. Ceci présente plusieurs avantages et permet en particulier :
- d'obtenir une position de l'aéronef plus précise et intègre que celle obtenue de façon usuelle par ledit système de gestion de vol 2, puisque l'on utilise ainsi uniquement des systèmes de niveau de développement élevé (système de référence inertiel 3, récepteur multimode d'aide à l'atterrissage 4, système de guidage 7) dans la boucle de position/guidage, ce qui n'est pas le cas pour le système de gestion de vol 2 ;
- de réduire les temps de latence dus au transfert des informations de positionnement dans la boucle de navigation/guidage ; et
- d'améliorer la précision et l'intégrité verticales.

Dans un mode de réalisation particulier, ledit système de gestion de vol 2 détermine une position auxiliaire correspondant à la position de l'aéronef et, avant la capture dudit axe d'approche, ledit dispositif d'aide à l'approche 1 conforme à l'invention utilise, de façon usuelle, cette position auxiliaire pour guider l'aéronef. Ainsi, avant la capture de l'axe d'approche, le guidage de l'aéronef est réalisé de façon usuelle, c'est-à-dire avec l'aide de la position calculée par le système de gestion de vol 2. Quant à la position hybride déterminée par le système de référence inertiel 3, elle est prise en compte dès le début de la capture de l'axe d'approche. Les performances notamment verticales concernant cette position, doivent permettre de respecter les niveaux de performance APV1 ou APV2 précités, autorisant la mise en oeuvre d'une approche avec guidage vertical de type APV.

On notera que ledit récepteur multimode d'aide à l'atterrissage 4 comporte, de façon usuelle :
- au moins une première fonction bord transverse, par exemple de type ILS, MLS ou GLS, permettant de mettre en oeuvre une approche de précision ; et
- une fonction bord transverse, par exemple de type FLS ("FMS Landing System" en anglais) permettant de réaliser une approche de non précision.

Par conséquent, ledit récepteur multimode d'aide à l'atterrissage 4 est en mesure de permettre la mise en oeuvre de tout type d'approche (précision, non précision, APV).

Par ailleurs, dans un mode de réalisation particulier, ledit système de guidage 7 peut comporter :
- des moyens 8, par exemple un pilote automatique, qui est relié par l'intermédiaire d'une liaison 9 audit récepteur 4 et qui est formé de manière à guider automatiquement l'aéronef, en tenant compte des écarts angulaires latéraux et verticaux reçus dudit récepteur 4 ; et
- au moins un moyen de visualisation 10 qui est relié par l'intermédiaire d'une liaison 11 audit récepteur 4 et qui est en mesure d'afficher, sur au moins un écran de visualisation 12 installé dans le poste de pilotage de l'aéronef, des informations relatives auxdits écarts angulaires latéraux et verticaux (et des indications de guidage relatives auxdits écarts). Ainsi, le pilot est en mesure de prendre connaissance de ces écarts et éventuellement de réaliser un guidage manuel de manière à les annuler. Ce moyen de visualisation 10 peut notamment être un moyen d'affichage de type EIS ("Electronic Instrument System" en anglais, c'est-à-dire système d'instrument électronique) ou un système d'alerte de vol de type FWS ("Flight Warning System" en anglais).

Ainsi, le dispositif 1 conforme à l'invention permet d'apporter aussi bien une aide lors d'un guidage automatique (moyens 8) que lors d'un guidage manuel (moyen de visualisation 10).

Par ailleurs, dans un mode de réalisation particulier, ledit dispositif 1 comporte de plus un récepteur 13 :
- qui coopère avec un système de positionnement par satellites usuel, par exemple de type GPS ou autre ;
- qui est relié par l'intermédiaire d'une liaison 14 à une antenne 15 qui est par exemple installée sur le toit de l'aéronef ;
- qui est directement intégré dans ledit récepteur multimode d'aide à l'atterrissage 4 ; et
- qui élabore, de façon usuelle, à l'aide de signaux reçus de l'antenne 15, lesdites données de position de l'aéronef qui sont ensuite transmises, au moins audit système de référence inertiel 3 par l'intermédiaire d'une liaison 16.

Dans un mode de réalisation préféré, ledit système de référence inertiel 3, par exemple de type ADIRU ("Air Data / Inertial Reference Unit" en anglais), utilise pour déterminer la position hybride courante de l'aéronef, un algorithme usuel d'hybridation de type "precision-AIME". Un tel algorithme "precision-AIME" est particulièrement précis (généralement ± 6 mètres en horizontale, et ± 9 mètres en verticale) et très performant. Une telle utilisation permet d'augmenter la précision du dispositif d'aide à l'approche 1 conforme à l'invention.

En outre, dans un mode de réalisation particulier, ledit récepteur multimode d'aide à l'atterrissage 4 comporte, de plus, un moyen de surveillance 17 intégré. Ce moyen de surveillance 17 surveille des paramètres de performance relatifs à la position hybride fournie par ledit système de référence inertiel 3. Les résultats de cette surveillance sont transmis à un moyen de visualisation (par exemple au moyen de visualisation 10) qui est susceptible de présenter ces résultats à un pilote de l'aéronef. On notera que le moyen de surveillance 17 du récepteur multimode d'aide à l'atterrissage 4 ne transmet pas les résultats de sa surveillance directement au moyen de visualisation, mais à un moyen de guidage usuel qui les consolide, puis les envoie audit moyen de visualiation. Par conséquent, en fonction des performances effectives (notamment verticales) ainsi fournies, le pilote est averti de la capacité de l'aéronef à réaliser (ou non) une approche avec guidage vertical de type APV.

Dans ce cas, de préférence, ledit moyen de surveillance 17 peut fournir des résultats qui sont relatifs respectivement aux situations suivantes :
- la performance (ou niveau de performance) APV2 prédéterminée, relative à ladite approche avec guidage vertical APV, est tenue par l'aéronef ;
- ladite performance APV2 n'est plus tenue par l'aéronef, mais la performance (ou niveau de performance) APV1 moins stricte, également relative à ladite approche avec guidage vertical APV, est tenue par l'aéronef ;
- ladite performance APV1 n'est plus tenue par l'aéronef, mais l'approche peut quand même être poursuivie ; et
- les performances sont insuffisantes pour poursuivre l'approche.

## Revendications

1. Dispositif d'aide à l'approche qui est monté sur un aéronef et qui est destiné à aider ledit aéronef au moins lors d'une approche avec guidage vertical suivant un axe d'approche, ledit dispositif (1) comportant un système de guidage (7) qui reçoit des écarts latéraux et verticaux et les utilise pour le guidage de l'aéronef,
**caractérisé en ce qu'**il comporte, de plus :
- un système de gestion de vol (2) qui détermine ledit axe d'approche ;
- un système de référence inertiel (3) qui élabore des données de position inertielles, qui reçoit des données de position de l'aéronef, et qui, à l'aide desdites données de position reçues et desdites données de position inertielles élaborées, détermine une position hybride de l'aéronef ; et
- un récepteur multimode d'aide à l'atterrissage (4) qui est relié audit système de gestion de vol (2) et audit système de référence inertiel (3), qui reçoit des informations relatives audit axe d'approche et à ladite position hybride, qui en déduit des écarts angulaires latéraux et verticaux, au moins dès la capture dudit axe d'approche, et qui transmet ces écarts angulaires audit système de guidage (7), ledit récepteur multimode d'aide à l'atterrissage (4) comportant un moyen de surveillance (17) intégré, qui surveille des paramètres de performance relatifs à la position hybride fournie par ledit système de référence inertiel (3), les résultats de cette surveillance étant transmis à un moyen de visualisation qui est susceptible de présenter ces résultats à un pilote de l'aéronef.

2. Dispositif selon la revendication 1,
**caractérisé en ce que** ledit système de guidage (7) comporte des moyens (8) pour guider automatiquement l'aéronef, en tenant compte desdits écarts angulaires latéraux et verticaux.

3. Dispositif selon l'une des revendications 1 et 2,
**caractérisé en ce que** ledit système de guidage (7) comporte au moins un moyen de visualisation (10) pour afficher, sur au moins un écran de visualisation (12), lesdits écarts angulaires latéraux et verticaux issus dudit récepteur multiode d'aide à l'atterrissage (4) et des indications de guidage relatives auxdits écarts.

4. Dispositif selon l'une quelconque des revendications précédentes,
**caractérisé en ce qu'**il comporte, de plus, un récepteur (13) qui coopère avec un système de positionnement par satellites, qui est intégré dans ledit récepteur multimode d'aide à l'atterrissage (4), et qui élabore lesdites données de position de l'aéronef qui sont ensuite transmises au moins audit système de référence inertiel (3).

5. Dispositif selon l'une quelconque des revendications précédentes,
**caractérisé en ce que** ledit moyen de surveillance (17) est susceptible d'émettre des résultats qui sont relatifs respectivement aux situations suivantes :
- une première performance APV2 prédéterminée, relative à ladite approche avec guidage vertical, est tenue par l'aéronef ;
- ladite première performance APV2 n'est pas tenue par l'aéronef, mais une seconde performance APV1 moins stricte, également relative à ladite approche avec guidage vertical, est tenue par l'aéronef ;
- ladite seconde performance APV1 n'est pas tenue par l'aéronef, mais l'approche peut quand même être poursuivie ; et
- les performances sont insuffisantes pour poursuivre l'approche.

6. Dispositif selon l'une quelconque des revendications précédentes,
**caractérisé en ce que** ledit système de gestion de vol (2) détermine une position auxiliaire correspondant à la position de l'aéronef et, avant la capture dudit axe d'approche, ledit dispositif d'aide à l'approche (1) utilise cette position auxiliaire pour guider l'aéronef.

7. Aéronef,
**caractérisé en ce qu'**il comporte un dispositif d'aide à l'approche (1) tel que celui spécifié sous l'une quelconque des revendications 1 à 6.

## Patentansprüche

1. Vorrichtung zur Anflughilfe, welche an einem Luftfahrzeug angebracht ist und welche dazu bestimmt ist, das Luftfahrzeug wenigstens bei einem Anflug mit vertikaler Führung entlang einer Anflugachse zu unterstützen, wobei die Vorrichtung (1) ein Führungssystem (7) aufweist, welches seitliche und vertikale Abweichungen empfängt und sie für die Führung des Luftfahrzeugs verwendet,
**dadurch gekennzeichnet, dass** sie außerdem aufweist:
- ein Flugmanagementsystem (2), welches die Anflugachse bestimmt;
- ein Trägheitsreferenzsystem (3), welches inertiale Positionsdaten ermittelt, welches Positionsdaten des Luftfahrzeugs empfängt und welches mithilfe der empfangenen Positionsdaten und der ermittelten inertialen Positionsdaten eine Hybridposition des Luftfahrzeugs bestimmt; und
- einen Multimode-Empfänger zur Landehilfe (4), welcher mit dem Flugmanagementsystem (2) und mit dem Trägheitsreferenzsystem (3) verbunden ist, welcher Informationen in Bezug auf die Anflugachse und auf die Hybridposition empfängt, welcher daraus seitliche und vertikale Winkelabweichungen wenigstens ab der Erfassung der Anflugachse ableitet und welcher diese Winkelabweichungen zu dem Führungssystem (7) überträgt, wobei der Multimode-Empfänger zur Landehilfe (4) ein integriertes Überwachungsmittel (17) aufweist, welches Leistungsparameter in Bezug auf die von dem Trägheitsreferenzsystem (3) gelieferte Hybridposition überwacht, wobei die Ergebnisse dieser Überwachung zu einem Visualisierungsmittel übertragen werden, welches dazu eingerichtet ist, diese Ergebnisse einem Piloten des Luftfahrzeugs zu präsentieren.

2. Vorrichtung nach Anspruch 1,
**dadurch gekennzeichnet, dass** das Führungssystem (7) Mittel (8) aufweist, um das Luftfahrzeug unter Berücksichtigung der seitlichen und vertikalen Winkelabweichungen automatisch zu führen.

3. Vorrichtung nach einem der Ansprüche 1 und 2,
**dadurch gekennzeichnet, dass** das Führungssystem (7) mindestens ein Visualisierungsmittel (10) aufweist, um auf mindestens einem Visualisierungsbildschirm (12) die seitlichen und vertikalen Winkelabweichungen von dem Multimode-Empfänger zur Landehilfe (4) und Führungshinweise in Bezug auf die Abweichungen anzuzeigen.

4. Vorrichtung nach einem der vorhergehenden Ansprüche,
**dadurch gekennzeichnet, dass** sie außerdem einen Empfänger (13) aufweist, welcher mit einem satellitengestützten Positionsbestimmungssystem zusammenwirkt, welcher in den Multimode-Empfänger zur Landehilfe (4) integriert ist und welcher die Positionsdaten des Luftfahrzeugs ermittelt, die anschließend mindestens zu dem Trägheitsreferenzsystem (3) übertragen werden.

5. Vorrichtung nach einem der vorhergehenden Ansprüche, **dadurch gekennzeichnet, dass** das Überwachungsmittel (17) dazu eingerichtet ist, Ergebnisse auszugeben, welche jeweils eine der folgenden Situationen betreffen:
- eine erste vorbestimmte Leistung APV2, die den Anflug mit vertikaler Führung betrifft, wird von dem Luftfahrzeug erreicht;
- die erste Leistung APV2 wird von dem Luftfahrzeug nicht erreicht, aber eine zweite, weniger anspruchsvolle Leistung APV1, die ebenfalls den Anflug mit vertikaler Führung betrifft, wird von dem Luftfahrzeug erreicht;
- die zweite Leistung APV1 wird von dem Luftfahrzeug nicht erreicht, der Anflug kann jedoch trotzdem fortgesetzt werden; und
- die Leistungen sind unzureichend, um den Anflug fortzusetzen.

6. Vorrichtung nach einem der vorhergehenden Ansprüche,
**dadurch gekennzeichnet, dass** das Flugmanagementsystem (2) eine Hilfsposition bestimmt, die der Position des Luftfahrzeugs entspricht, und vor der Erfassung der Anflugachse die Vorrichtung zur Anflughilfe (1) diese Hilfsposition verwendet, um das Luftfahrzeug zu führen.

7. Luftfahrzeug,
**dadurch gekennzeichnet, dass** es eine Vorrichtung zur Anflughilfe (1) nach einem der Ansprüche 1 bis 6 aufweist.

## Claims

1. A device for assisting an approach which is mounted on an aircraft and which is intended to assist said aircraft at least during an approach with vertical guidance following an approach axis, said device (1) comprising a guidance system (7) which receives lateral and vertical deviations and uses them for the guidance of the aircraft,
**characterized in that** it comprises, moreover:
- a flight management system (2) which determines said approach axis;
- an inertial reference system (3) which formulates inertial position data, which receives position data for the aircraft, and which, with the assistance of said position data received and of said formulated inertial position data, determines a hybrid position of the aircraft; and
- a multimode landing assistance receiver (4) which is connected to said flight management system (2) and to said inertial reference system (3), which receives information relating to said approach axis and to said hybrid position, which deduces therefrom lateral and vertical angular deviations, at least as soon as said approach axis is captured, and which transmits these angular deviations to said guidance system (7), said multimode landing assistance receiver (4) comprising an integrated monitoring means (17), which monitors performance parameters relating to the hybrid position provided by said inertial reference system (3), the results of this monitoring being transmitted to a viewing means which is capable of presenting these results to a pilot of the aircraft.

2. The device as claimed in claim 1,
**characterized in that** said guidance system (7) comprises means (8) for automatically guiding the aircraft, by taking account of said lateral and vertical angular deviations.

3. The device as claimed in one of claims 1 and 2,
**characterized in that** said guidance system (7) comprises at least one viewing means (10) for displaying, on at least one viewing screen (12), said lateral and vertical angular deviations arising from said multimode landing assistance receiver (4) and from the guidance indications relating to said deviations.

4. The device as claimed in any one of the preceding claims,
**characterized in that** it comprises, moreover, a receiver (13) which cooperates with a satellite-based positioning system, which is integrated within said multimode landing assistance receiver (4), and which formulates said position data for the aircraft which are thereafter transmitted at least to said inertial reference system (3).

5. The device as claimed in any one of the preceding claims,
**characterized in that** said monitoring means (17) is capable of emitting results which relate respectively to the following situations:
- a first predetermined performance rating APV2, relating to said approach with vertical guidance, is upheld by the aircraft;
- said first performance rating APV2 is not upheld by the aircraft, but a second less strict performance rating APV1, also relating to said approach with vertical guidance, is upheld by the aircraft;
- said second performance rating APV1 is not upheld by the aircraft, but the approach can nevertheless be continued; and
- the performance ratings are insufficient to continue the approach.

6. The device as claimed in any one of the preceding claims,
**characterized in that** said flight management system (2) determines an auxiliary position corresponding to the position of the aircraft and, before said approach axis is captured, said device for assisting an approach (1) uses this auxiliary position to guide the aircraft.

7. An aircraft,
**characterized in that** it comprises a device for assisting an approach (1) such as that specified under any one of claims 1 to 6.
